# EUROPEAN PATENT SPECIFICATION

(11) **EP 3 745 686 B1**
(45) Date of publication and mention of the grant of the patent: **01.05.2024**
(21) Application number: 19217940.6
(22) Date of filing: 19.12.2019
(51) Int. Cl.: H04M 1/02, G06V 40/13, G06F 3/041, G06F 1/16

(54) **TOUCH SCREEN MODULE, METHOD OF MANUFACTURING THE SAME, AND TERMINAL DEVICE**
BERÜHRUNGSEMPFINDLICHES BILDSCHIRMMODUL, VERFAHREN ZUR HERSTELLUNG DESSELBEN UND ENDGERÄT
MODULE D'ÉCRAN TACTILE, SON PROCÉDÉ DE FABRICATION ET DISPOSITIF DE TERMINAL

(30) Priority: 27.05.2019 CN 201910448221
(43) Date of publication of application: 02.12.2020
(73) Proprietor: Beijing Xiaomi Mobile Software Co., Ltd., Beijing 100085 (CN)
(72) Inventor: WANG, Di, Beijing, Beijing 100085 (CN); HAN, Gaocai, Beijing, Beijing 100085 (CN)
(74) Representative: Kudlek, Franz Thomas

(56) References cited:
- EP-A1- 3 316 093
- WO-A1-2019/093683
- KR-A- 20170 119 623
- US-A1- 2011 175 841
- US-A1- 2018 251 032
- US-A1- 2021 174 048

## Description

### TECHNICAL FIELD

The present invention relates to the field of terminal devices, and in particular to a touch screen and a method of manufacturing the same, and a terminal device.

### BACKGROUND

With the development of foldable screens, flexible display screens are mostly used to manufacture touch screens. Better technology experiences will be brought to users by designing an under-screen optical fingerprint identification function for the flexible display screen. During assembly of a terminal device, it is desired to dispose a hard supporting layer, for example, a stainless steel layer, on a back surface of the flexible display screen, so as to maintain a bending state of the flexible display screen. However, the poor light transmittance of the supporting layer hinders a design of the under-screen optical fingerprint identification function for the flexible display screen. The problem of light transmission is solved by opening a light transmitting hole in the supporting layer. In a case where the light transmitting hole is opened in the supporting layer, when a display surface of the flexible display screen is pressed, a defect in appearance, for example, a depression, may be easily formed on the display surface of the flexible display screen, which results in unstable structure of the display screen. The document KR 2017011923 A describes an electronic device that includes a display. The electronic device also includes a fingerprint sensor disposed under one or more pixels. The fingerprint sensor is adapted to acquire image information corresponding to a fingerprint of an external object that is in proximity to or in contact with the display based on at least a light radiated from at least one pixel and reflected by the external object. The electronic device also includes a rear panel disposed under the display. The rear panel includes an aperture corresponding to a disposition of the fingerprint sensor. The electronic device further includes a bracket disposed under the rear panel to support the display, and including a sensor seating area in which the fingerprint sensor is disposed. The fingerprint sensor is affixed to the sensor seating area. A gap is formed between the display and the fingerprint sensor which may be filled with an optical bonding layer.

### SUMMARY

The present disclosure is set out in the appended set of claims.

### BRIEF DESCRIPTION OF DRAWINGS

FIG. 1 is a schematic diagram illustrating a structure of a touch screen according to an example of the present disclosure not being part of the present invention.
FIG. 2 is a schematic diagram illustrating a structure of a touch screen according to an example of the present disclosure not being part of the present invention.
FIG. 3 is a schematic diagram illustrating a structure of a touch screen according to an example of the present disclosure.
FIG. 4 is a flowchart illustrating a method of manufacturing a touch screen according to an example of the present disclosure.
FIG. 5 is a schematic diagram illustrating a supporting layer placed on a fixture platform according to an example of the present disclosure not being part of the present invention.
FIG. 6 is a schematic diagram illustrating a supporting layer placed on a fixture platform according to an example of the present disclosure not being part of the present invention.
FIG. 7 is a schematic diagram illustrating connecting a supporting layer and a supporting member according to an example of the present disclosure not being part of the present invention.
FIG. 8 is a schematic diagram of integrally forming a supporting layer and a supporting member according to an example of the present disclosure not being part of the present invention.

### DETAILED DESCRIPTION

Exemplary embodiments will be described in detail herein, examples of which are illustrated in the drawings. When the following descriptions involve the drawings, like numerals in different drawings identify same or similar elements unless stated otherwise. The implementations described in the following exemplary embodiments do not represent all implementations consistent with the present disclosure. On the contrary, they are merely examples of an apparatus and a method consistent with some aspects of the present disclosure described in detail in the appended claims.

Terms used herein are used to only describe a particular example rather than limit the present disclosure. Unless otherwise defined, technical terms or scientific terms used in the present disclosure should have general meanings that can be understood by ordinary persons of skill in the art. "First" "second" and the like used in the specification and claims do not represent any sequence, quantity or importance, and are merely used to distinguish different components. Similarly, "one" or "a" and the like do not represent quantity limitation but represent at least one. Unless otherwise stated, "include" or "contain" or the like is intended to refer to that an element or object before "include" or "contain" covers an element or object or its equivalents listed after "include" or "contain", and does not exclude other elements or objects. "Connect" or "connect with" or the like is not limited to physical or mechanical connection but includes direct or indirect electrical connection.

The singular forms such as "a", 'said", and "the" used in the present disclosure and the appended claims are also intended to include multiple forms, unless the context clearly indicates other meanings. It is also to be understood that the term "and/or" as used herein refers to any or all possible combinations that include one or more listed items that are associated.

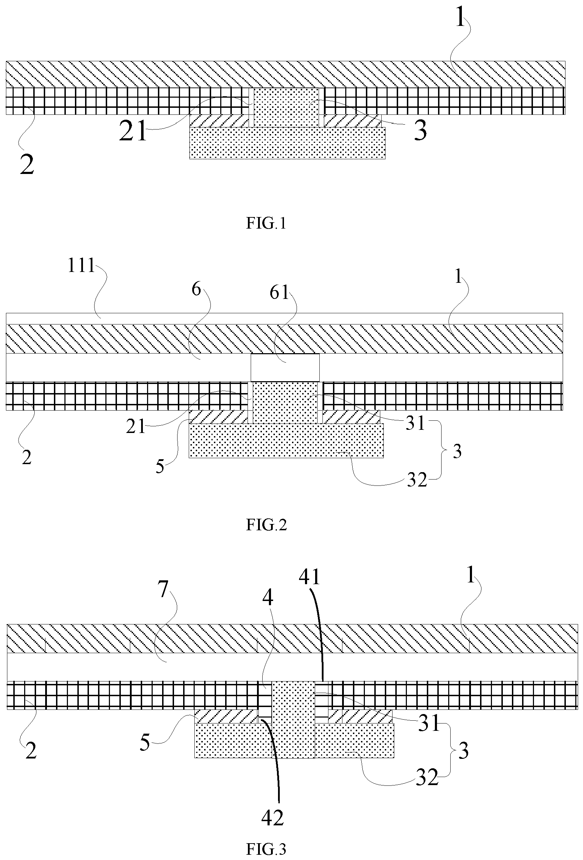

The embodiments of FIGs. 1-2 and 5 to 8 are not covered within the scope of the independent claims and are present for illustration purposes only.

In some embodiments, a flexible display screen includes a display surface, and a back surface opposite to the display surface. The display surface is used to display information such as digits and images. The back surface of the flexible display screen is connected with a supporting layer which supports the flexible display screen and maintains the flexible display screen in a bending state. When the under-screen optical fingerprint identification function is designed, for example, light transmission to the under-screen fingerprint identification element is required. Due to the poor light transmittance of the supporting layer, a light transmitting hole is opened on the supporting layer to satisfy light transmission requirements. However, the surface of the supporting layer may become uneven. When the flexible display screen is pressed, a depression will easily form on the display surface of the flexible display screen, which results in unstable structure, appearance defects of the display screen and so on. Based on this, the present disclosure provides a touch screen, a method of manufacturing the touch screen and a terminal device.

FIG. 1 is a schematic diagram illustrating a structure of a touch screen according to an example of the present disclosure. As shown in FIG. 1, the touch screen according to a first aspect of the present disclosure includes a flexible display screen 1, a supporting layer 2 and a transparent supporting member 3. The supporting layer 2 includes a first surface, a second surface opposite to the first surface, and a light transmitting hole 21 communicating the first surface and the second surface. The first surface is connected with, e.g., tightly attached to, a back surface of the flexible display screen 1. At least a part of the supporting member 3 including an end of the supporting member 3 is disposed in the light transmitting hole 21, and at least a part of the end of the supporting member 3 in the light transmitting hole 21 is flush with the first surface.

In the touch screen according to one or more embodiments of the present invention, at least a part of the transparent supporting member 3 is disposed in the light transmitting hole 21, so that the supporting layer 2 meet light transmission requirements through the supporting member 3, which facilitates the design of the under-screen optical fingerprint identification function. By having at least a part of the end of the supporting member 3 in the light transmitting hole 21 flush with the first surface of the supporting layer 2, appearance defects such as a depression, which forms on a display surface of the flexible display screen when the display surface corresponding to the light transmitting hole 21 is pressed, may be avoided. In this way, the structural stability of the flexible display screen is increased, and the aesthetic appearance is guaranteed. Further, the touch screen is simple in structure and easy to manufacture.

In embodiments of the present invention, the supporting layer 2 may be a steel layer, a steel-copper-steel composite layer and so on. The supporting layer 2 has good mechanical strength and bendability to support and stabilize the morphology (e.g. shape) of the flexible display screen 1. The light transmitting hole 21 of the supporting layer 2 may be of a regular or irregular shape such as circle and square. A thickness of the supporting layer 2 may be in a range from 0.15mm to 0.25mm, for example, 0.15mm, 0.18mm, 0.2mm, 0.22mm, and 0.25mm.

The supporting member 3 is made of a transparent material such as glass, Polyethylene Terephthalate (PET), and PolyImide (PI) to solve the problem of light transmission. Further, the supporting member 3 has good mechanical strength to effectively support the flexible display screen 1.

FIG. 2 is a schematic diagram illustrating a structure of a touch screen according to an example of the present disclosure. As shown in FIG. 2, the supporting member 3 includes a first supporting portion 31 and a second supporting portion 32 connected with a side wall of the first supporting portion 31. The first supporting portion is disposed in the light transmitting hole 21, and the second supporting portion 32 is connected with the second surface of the supporting layer 2. In this way, the first supporting portion 31 is disposed in the light transmitting hole 21 by controlling the second supporting portion 32, so as to facilitate production and manufacturing of the touch screen. The first supporting portion 31 may be a structure matched with the light transmitting hole 21. For example, the shape of an outer wall of the first supporting portion 31 may be the same as or be complementary to that of an inner wall of the light transmitting hole 21. The second supporting portion 32 may be a plate structure to facilitate connection with the second surface of the supporting layer 2. The first supporting portion 31 may be a cylindrical structure with a diameter ranging from 8mm to 9mm, for example, 8mm, 8.2mm, 8.4mm, 8.6mm, 8.8mm, and 9mm. The second supporting portion 32 may be an annular plate structure with an outer diameter ranging from 12.4mm to 13mm, for example, 12.4mm, 12.6mm, 12.8mm and 13mm and an inner diameter matched with the diameter of the first supporting portion 31. As shown in FIG. 3, a first supporting portion 31 is partially disposed in the light transmitting hole 21, and bottom surfaces of both the first supporting portion 31 and the second supporting portion 32 which are away from the second surface of the supporting layer 2 are flush, so as to avoid wearing other components.

In one or more embodiments, the end of the supporting member 3 in the light transmitting hole 21 is completely flush with the first surface, which improves the flatness of the first surface of the supporting layer 2 and increases an area that the supporting member 3 supports the flexible display screen 1. Thus, appearance defects such as a depression, which forms on the display surface of the flexible display screen 1 when the display surface is pressed, is avoided effectively. When the supporting member 3 includes the first supporting portion 31 and the second supporting portion 32, the end surface of the first supporting portion 31 which is close to the flexible display screen 1 is completely flush with the first surface of the supporting layer 2.

In embodiments of the present invention, the supporting member 3 is disposed in the light transmitting hole 21 in many manners, several examples of which will be illustrated below.

Illustratively, FIG. 3 is a schematic diagram illustrating a structure of a touch screen according to an example of the present invention. As shown in FIG. 3, the supporting member 3 is connected with the light transmitting hole 21 through a transparent first adhesive member 4. By disposing the first adhesive member 4, the stable connection between the supporting member 3 and the light transmitting hole 21 is realized, and the transmission of light to the flexible display screen 1 is facilitated. Here, the first adhesive member 4 has two ends: the first end 41 is close to the flexible display screen 1 while the second end 42 is away from the flexible display screen 1. In other words, the first distance between the first end 41 and the flexible display screen 1 is shorter than the second distance between the second end 42 and the flexible display screen 1. The end 41 of the first adhesive member 4 that is close to the flexible display screen is flush with the first surface, so as to ensure flatness of the first surface of the supporting layer 2. In this way, appearance defects such as a depression, which forms on the display surface of the flexible display screen 1 when the display surface is pressed, is avoided effectively. The first adhesive member 4 may be formed by Optically Clear Adhesive (OCA) or CG adhesive. The OCA adhesive and the CG adhesive both have good light transmittance and adhesive strength, which allows the first adhesive member 4 to have good light transmittance and adhesive strength.

Illustratively, the supporting member 3 and the supporting layer 2 are integrally formed to reduce manufacturing procedures, and facilitate the production and manufacturing of the touch screen. For example, in some embodiments, the supporting member 3 and the supporting layer 2 are formed as a single structure by melding, welding, heating, or 3D printing, etc. Or, in other embodiments, the supporting member 3 and the supporting layer 2 may be removable from each other.

Illustratively, as shown in FIG. 3, the supporting member 3 includes the first supporting portion 31 and the second supporting portion 32. In this case, the second supporting portion 32 is connected with the second surface of the supporting layer 2 through a second adhesive member 5, so that the first supporting portion 31 is fixed in the light transmitting hole 21. The second adhesive member 5 and the first adhesive member 4 may be made of the same material or different materials.

In an example, as shown in FIG. 2, a first adhesive layer 6 is disposed between the flexible display screen 1 and the supporting layer 2. A light transmitting adhesive layer 61 corresponding to the light transmitting hole 21 is included in the first adhesive layer 6. The effective connection of the flexible display screen 1 and the supporting layer 2 is realized by disposing the first adhesive layer 6, and the transmission of light to the flexible display screen 1 is facilitated by disposing the light transmitting adhesive layer 61. The surfaces of both the first adhesive layer 6 and the light transmitting adhesive layer 61 that face toward the flexible display screen 1 are flush with each other, so as to effectively ensure flatness of the display surface of the flexible display screen 1. The first adhesive layer 6 may be made of foam adhesive, and the light transmitting adhesive layer 61 may be made of OCA adhesive. A thickness of the first adhesive layer 6 may be in a range from 0.15mm to 0.25mm, for example, 0.15mm, 0.18mm, 0.2mm, 0.22mm and 0.25mm.

In an example, as shown in FIG. 3, a transparent second adhesive layer 7 is disposed between the flexible display screen 1 and the supporting layer 2 to effectively transmit light to the flexible display screen 1. The second adhesive layer 7 may be made of OCA adhesive, and a thickness of the second adhesive layer 7 may be in a range from 0.15mm to 0.25mm, for example, 0.15mm, 0.18mm, 0.2mm, 0.22mm and 0.25mm.

In an example, as shown in FIG. 2, a protective film 111, for example, a transparent PI film, is further disposed on the display surface of the flexible display screen 1 to protect the flexible display screen 1.

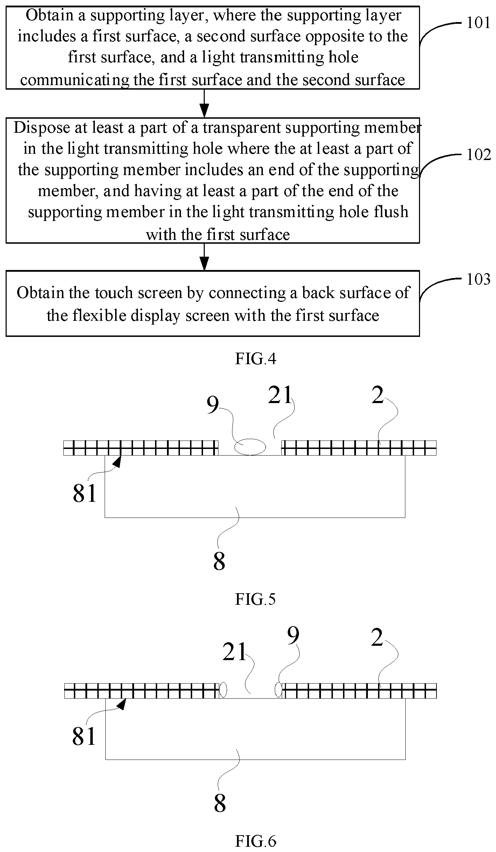

FIG. 4 is a flowchart illustrating a method of manufacturing a touch screen according to an example of the present disclosure. As shown in FIG. 4, the method of manufacturing a touch screen according to a second aspect of the present disclosure includes the following step 101 to step 103.

At step 101, a supporting layer 2 is obtained. The supporting layer 2 includes a first surface, a second surface opposite to the first surface, and a light transmitting hole communicating the first surface and the second surface. A reference may be made to the descriptions of the first aspect of the present disclosure for the structure and material of the supporting layer 2.

At step 102, at least a part of a transparent supporting member 3 is disposed in the light transmitting hole 21 where the at least a part of the transparent supporting member 3 includes an end of the supporting member 3, and at least a part of the end of the supporting member 3 in the light transmitting hole 21 is made flush with the first surface. A reference may be made to the descriptions of the first aspect of the present disclosure for the structure and material of the transparent supporting member 3.

In some embodiments, step 102 includes but not limited to the following step 1021 to step 1024.

FIG. 5 is a schematic diagram illustrating a supporting layer placed on a fixture platform according to an example of the present disclosure.

At step 1021, as shown in FIG. 5, the supporting layer 2 is placed on the reference plane 81 of the fixture platform 8 with the first surface facing the reference plane 81. The first surface of the supporting layer 2 closely contacts the reference plane 81.

At step 1022, an adhesive 9 is dripped into the light transmitting hole 21. The adhesive 9 may be OCA adhesive or CG adhesive. Optionally, step 1022 includes but not limited to: dripping the adhesive 9 into a middle part of the light transmitting hole 21 as shown in FIG. 5; and / or dripping the adhesive 9 to edges of the light transmitting hole 21 as shown in FIG. 6. FIG. 6 is a schematic diagram illustrating a supporting layer placed on a fixture platform according to an example of the present disclosure.

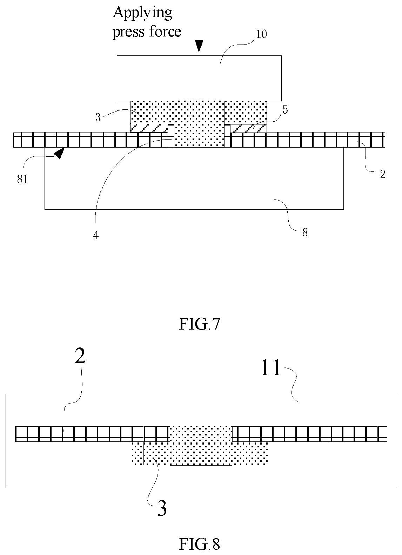

FIG. 7 is a schematic diagram illustrating connecting a supporting layer and a supporting member according to an example of the present disclosure.

At step 1023, as shown in FIG. 7, at least a part of the supporting member 3 is placed in the light transmitting hole 21, and a press force toward the reference surface 81 is applied by a pressing member 10 to the supporting member 3 so that the first adhesive member 4 is formed by the adhesive 9 between the supporting member 3 and the light transmitting hole 21, so as to fix at least one part of the supporting member 3 in the light transmitting hole 21. For example, the first adhesive member 4 is formed by the adhesive 9 between the portion of the supporting member 3 which is located in the light transmitting hole 21 and the side walls of the light transmitting hole 21. Further, the adhesive 9 may also flow to between the supporting member 3 and the second surface of the supporting layer 2, so as to form the second adhesive member 5.

For example, the adhesive 9 may flow to a region between a remaining portion of the supporting member 3 and the second surface of the supporting layer 2. By placing at least a part of the supporting member 3 into the light transmitting hole 21 based on the reference plane 81 of the fixture platform 8, at least a part of the end of the supporting member 3 in the light transmitting hole 21 is flush with the first surface of the supporting layer. For example, the press force is applied to the supporting member 3 by the pressing member 10, so that at least one part of the supporting member 3 is located in the light transmitting hole 21, and at least one part of the end of the supporting member 3 as well as the first surface of the supporting layer 2 are both abutted against the reference surface 81.

Step 102 further includes step 1024. At step 1024, the first surface of the supporting layer 2 is polished, so that the first surface of the supporting layer 2 is flush with a surface of the end of the supporting member 3.

By the above method, at least one part of the supporting member 3 is disposed in the light transmitting hole 21, and at least one part of the supporting member 3 in the light transmitting hole 21 is flush with the first surface.

In an embodiment, step 102 includes but not limited to the following steps I to step III.

FIG. 8 is a schematic diagram illustrating integral formation of a supporting layer and a supporting member according to an example of the present disclosure.

At step I, as shown in FIG. 8, the supporting layer 2 is placed in a mould 11, and a space of the supporting member is formed between the supporting layer and an inner wall of the mould 11. The space of the supporting member is in communication with the light transmitting hole 21.

At step II, a precursor fluid of the supporting member is injected into the light transmitting hole 21, and a cover of the mould 11 is assembled for moulding. In this way, the supporting layer 2 and the transparent supporting member 3 which are structurally integrated are obtained, and at least one part of the supporting member 3 is located in the light transmitting hole 21. It is to be noted that under the shaping of the mould 11 at least one part of the end of the supporting member 3 in the light transmitting hole 21 is made flush with the first surface. It is to be noted that a melting point of the supporting member 3 is lower than that of the supporting layer 2.

Step 102 further includes step III. At step III, the first surface of the supporting layer 2 and the surface of the supporting member 3, which are structurally integrated, are polished, so as to effectively ensure that at least one part of the end of the supporting member 3 in the light transmitting hole 21 is flush with the first surface.

In an embodiment, the supporting member 3 includes the first supporting portion 31, and the second supporting portion 32 connected with the side wall of the first supporting portion 31. Step 102 includes but not limited to the following step a to step c.

At step a, the first supporting portion 31 is placed in the light transmitting hole 21, and the second supporting portion 32 is placed to contact the second surface of the supporting layer 2.

At step b, the adhesive 9 is dripped between the second supporting portion 32 and the second surface, so that the second adhesive member 5 is formed by the adhesive 9 between the second supporting portion 32 and the second surface to fix the first supporting portion 31 in the light transmitting hole 21. The adhesive 9 may be OCA adhesive or CG adhesive.

Step 102 further includes step c. At step c, the first supporting portion 31 and the first surface of the supporting layer 2 are both polished, so that the first surface of the supporting layer 2 is flush with the surface of the supporting member 3.

At step 103, a touch screen is obtained by connecting a back surface of the flexible display screen 1 with the first surface.

In an embodiment, step 103 includes but not limited to the following step 1031 to step 1032. At step 1031, a first adhesive layer 6 is obtained. The first adhesive layer 6 includes a light transmitting adhesive layer 61. A reference may be made to relevant descriptions of the first aspect for the first adhesive layer 6 and the light transmitting adhesive layer 61.

At step 1032, the touch screen is obtained by disposing the light transmitting adhesive layer 61 corresponding to (that is above) the light transmitting hole 21 and connecting the back surface of the flexible display screen 1 with the first surface of the supporting layer 2 through the first adhesive layer 6.

In an embodiment, step 103 includes obtaining a transparent second adhesive layer 7 and connecting the back surface of the flexible display screen 1 with the first surface of the supporting layer 2 through the second adhesive layer 7, so as to obtain the touch screen.

In the method of manufacturing a touch screen according to the embodiments of the present disclosure, at least one part of the transparent supporting member 3 is disposed in the light transmitting hole 21, so that the supporting layer 2 meets light transmission requirements through the supporting member 3, which helps to design the under-screen optical fingerprint identification function. By having at least one part of the end of the supporting member 3 in the light transmitting hole 21 flush with the first surface of the supporting layer 2, appearance defects such as a depression, which forms on a display surface of the flexible display screen 1 when the display surface corresponding to the light transmitting hole 21 is pressed, may be avoided. In this way, the structural stability of the flexible display screen 1 is increased while the aesthetic appearance is guaranteed.

Since the embodiments of method basically correspond to the embodiments of apparatus, for a part of the embodiments of the method that is related to embodiments of the apparatus, a reference may be made to partial descriptions of the embodiments of the apparatus. The embodiments of method and the embodiments of apparatus are complementary to each other.

The terminal device according to the embodiments of the present disclosure includes the touch screen mentioned above. At least one part of the transparent supporting member 3 is disposed in the light transmitting hole 21, so that the supporting layer 2 meets light transmission requirements through the supporting member 3, which helps to design the under-screen optical fingerprint identification function. By having at least one part of the end of the supporting member 3 in the light transmitting hole 21 flush with the first surface of the supporting layer 2, appearance defects such as a depression which forms on a display surface of the flexible display screen 1 when the display surface corresponding to the light transmitting hole 21 is pressed, may be avoided. In this way, the structural stability of the flexible display screen 1 is increased while the aesthetic appearance is guaranteed.

## Claims

1. A touch screen, comprising:
a flexible display screen (1);
a supporting layer (2), comprising:
a first surface, connected with a back surface of the flexible display screen (1);
a second surface opposite to the first surface; and
a light transmitting hole (21) communicating the first surface and the second surface;
a transparent supporting member (3), wherein the transparent supporting member (3) comprises a first supporting portion (31) and a second supporting portion (32) connected with a side wall of the first supporting portion (31); the first supporting portion (31) is at least partially disposed in the light transmitting hole (21), so that the supporting layer (2) realizes light transmission requirements of an under-screen fingerprint identification element through the transparent supporting member (3); an end surface of the first supporting portion (31) which is close to the flexible display screen (1) is flush with the first surface, and the supporting layer (2) and the transparent supporting member (3) reduce a depression, which forms on a display surface of the flexible display screen (1) when the display surface corresponding to the light transmitting hole (21) is pressed, the supporting member (3) is connected with the light transmitting hole (21) through a transparent first adhesive member (4), an end of the first adhesive member (4) that is close to the flexible display screen (1) is flush with the first surface, the second supporting portion (32) is connected with the second surface of the supporting layer (2) through a second adhesive member (5); and
an adhesive layer disposed between the flexible display screen (1) and the supporting layer (2).

2. The touch screen according to claim 1, wherein the adhesive layer disposed between the flexible display screen (1) and the supporting layer (2) comprises a transparent second adhesive layer (7).

3. A method of manufacturing a display screen of a touch screen, comprising:
obtaining a supporting layer (2), wherein the supporting layer (2) comprises a first surface, a second surface opposite to the first surface, and a light transmitting hole (21) communicating the first surface and the second surface;
disposing at least a part of a first supporting portion (31) of a transparent supporting member (3) in the light transmitting hole (21), wherein the transparent supporting member (3) comprises a second supporting portion (32) connected with a side wall of the first supporting portion (31), so that the supporting layer (2) realizes light transmission requirements of an under-screen fingerprint identification element through the transparent supporting member (3); wherein an end surface of the first supporting portion (31) which is close to a flexible display screen (1) of the terminal device is flush with the first surface;
connecting the transparent supporting member (3) with the light transmitting hole (21) through a transparent first adhesive member (4), wherein an end of the first adhesive member (4) that is close to the flexible display screen (1) is flush with the first surface;
connecting the second supporting portion (32) with the second surface of the supporting layer (2) through a second adhesive member (5); and
obtaining the display screen by connecting a back surface of the flexible display screen (1) with the first surface, wherein the supporting layer and the transparent supporting member reduce a depression, which forms on a display surface of the flexible display screen when the display surface corresponding to the light transmitting hole is pressed.

4. The method according to claim 3, wherein connecting the back surface of the flexible display screen (1) with the first surface comprises:
obtaining a transparent second adhesive layer (7); and
connecting the back surface of the flexible display screen (1) with the first surface through the second adhesive layer (7).

## Patentansprüche

1. Ein Touchscreen, umfassend:
einen flexiblen Bildschirm (1);
eine Trägerschicht (2), umfassend:
eine erste Fläche, die mit einer Rückseite des flexiblen Bildschirms (1) verbunden ist;
eine zweite Oberfläche, die der ersten Oberfläche gegenüberliegt; und
ein lichtdurchlässiges Loch (21), das die erste Oberfläche und die zweite Oberfläche verbindet;
ein transparentes Stützelement (3) , wobei das transparente Stützelement (3) einen ersten Stützabschnitt (31) und einen zweiten Stützabschnitt (32) umfasst, der mit einer Seitenwand des ersten Stützabschnitts (31) verbunden ist; der erste Stützabschnitt (31) zumindest teilweise in dem lichtdurchlässigen Loch (21) angeordnet ist, so dass die Stützschicht (2) die Anforderungen an die Lichtdurchlässigkeit eines Fingerabdruckidentifikationselements unter dem Bildschirm durch das transparente Stützelement (3) realisiert; eine Endfläche des ersten Stützabschnitts (31), die sich in der Nähe des flexiblen Bildschirms (1) befindet, bündig mit der ersten Fläche ist, und die Stützschicht (2) und das transparente Stützelement (3) eine Vertiefung verringern, die sich auf einer Anzeigefläche des flexiblen Bildschirms (1) bildet, wenn die Anzeigefläche, die dem lichtdurchlässigen Loch (21) entspricht, gedrückt wird , das Stützelement (3) mit dem lichtdurchlässigen Loch (21) durch ein transparentes erstes Klebeelement (4) verbunden ist, ein Ende des ersten Klebeelements (4), das sich in der Nähe des flexiblen Bildschirms (1) befindet, bündig mit der ersten Oberfläche ist, der zweite Stützabschnitt (32) mit der zweiten Oberfläche der Stützschicht (2) durch ein zweites Klebeelement (5) verbunden ist; und
eine Klebeschicht, die zwischen dem flexiblen Bildschirm (1) und der Trägerschicht (2) angeordnet ist.

2. Touchscreen nach Anspruch 1, wobei die zwischen dem flexiblen Bildschirm (1) und der Trägerschicht (2) angeordnete Klebstoffschicht eine transparente zweite Klebstoffschicht (7) umfasst.

3. Verfahren zur Herstellung eines Anzeigebildschirms eines Touchscreens, umfassend:
Erhalten einer Trägerschicht (2), wobei die Trägerschicht (2) eine erste Oberfläche, eine zweite Oberfläche, die der ersten Oberfläche gegenüberliegt, und ein lichtdurchlässiges Loch (21) umfasst, das die erste Oberfläche und die zweite Oberfläche verbindet;
Anordnen mindestens eines Teils eines ersten Stützabschnitts (31) eines transparenten Stützelements (3) in dem lichtdurchlässigen Loch (21), wobei das transparente Stützelement (3) einen zweiten Stützabschnitt (32) umfasst, der mit einer Seitenwand des ersten Stützabschnitts (31) verbunden ist, so dass die Stützschicht (2) die Anforderungen an die Lichtdurchlässigkeit eines Fingerabdruck-Identifikationselements unter dem Bildschirm durch das transparente Stützelement (3) realisiert; wobei eine Endfläche des ersten Stützabschnitts (31), die sich in der Nähe eines flexiblen Anzeigebildschirms (1) des Endgeräts befindet, bündig mit der ersten Fläche ist;
Verbinden des transparenten Trägerelements (3) mit dem lichtdurchlässigen Loch (21) durch ein transparentes erstes Klebeelement (4), wobei ein Ende des ersten Klebeelements (4), das sich in der Nähe des flexiblen Bildschirms (1) befindet, bündig mit der ersten Oberfläche ist;
Verbinden des zweiten Stützteils (32) mit der zweiten Oberfläche der Stützschicht (2) durch ein zweites Klebeelement (5); und
Erhalten des Bildschirms durch Verbinden einer Rückseite des flexiblen Bildschirms (1) mit der ersten Fläche, wobei die Stützschicht und das transparente Stützelement eine Vertiefung verringern, die sich auf einer Anzeigefläche des flexiblen Bildschirms bildet, wenn die Anzeigefläche, die dem lichtdurchlässigen Loch entspricht, gedrückt wird.

4. Verfahren nach Anspruch 3, wobei das Verbinden der Rückseite des flexiblen Bildschirms (1) mit der ersten Oberfläche umfasst:
Erhalten einer transparenten zweiten Klebstoffschicht (7); und
Verbinden der Rückseite des flexiblen Bildschirms (1) mit der ersten Oberfläche durch die zweite Klebeschicht (7).

## Revendications

1. Un écran tactile, comprenant :
un écran d'affichage flexible (1) ;
une couche de support (2), comprenant
une première surface, reliée à la surface arrière de l'écran d'affichage flexible (1) ;
une deuxième surface opposée à la première ; et
un trou de transmission de la lumière (21) communiquant avec la première surface et la seconde surface ;
un élément de support transparent (3) , dans lequel l'élément de support transparent (3) comprend une première partie de support (31) et une deuxième partie de support (32) reliée à une paroi latérale de la première partie de support (31) ; la première partie de support (31) est au moins partiellement disposée dans le trou de transmission de la lumière (21), de sorte que la couche de support (2) répond aux exigences de transmission de la lumière d'un élément d'identification d'empreintes digitales sous l'écran à travers l'élément de support transparent (3) ; une surface d'extrémité de la première partie de support (31) qui est proche de l'écran d'affichage flexible (1) est au ras de la première surface, et la couche de support (2) et l'élément de support transparent (3) réduisent une dépression qui se forme sur une surface d'affichage de l'écran d'affichage flexible (1) lorsque la surface d'affichage correspondant au trou de transmission de la lumière (21) est pressée , l'élément de support (3) est relié au trou de transmission de la lumière (21) par un premier élément adhésif transparent (4), une extrémité du premier élément adhésif (4) qui est proche de l'écran d'affichage flexible (1) est au ras de la première surface, la deuxième partie de support (32) est reliée à la deuxième surface de la couche de support (2) par un deuxième élément adhésif (5) ; et
une couche adhésive disposée entre l'écran flexible (1) et la couche de support (2) .

2. L'écran tactile selon la revendication 1, dans lequel la couche adhésive disposée entre l'écran d'affichage flexible (1) et la couche de support (2) comprend une deuxième couche adhésive transparente (7).

3. Méthode de fabrication d'un écran d'affichage d'un écran tactile, comprenant :
obtenir une couche de support (2), dans laquelle la couche de support (2) comprend une première surface, une seconde surface opposée à la première surface et un trou de transmission de la lumière (21) communiquant avec la première surface et la seconde surface ;
disposer au moins une partie d'une première partie de support (31) d'un élément de support transparent (3) dans le trou de transmission de la lumière (21), l'élément de support transparent (3) comprenant une deuxième partie de support (32) reliée à une paroi latérale de la première partie de support (31), de sorte que la couche de support (2) réponde aux exigences de transmission de la lumière d'un élément d'identification d'empreintes digitales sous l'écran à travers l'élément de support transparent (3) ; une surface d'extrémité de la première partie de support (31) qui est proche d'un écran d'affichage flexible (1) du dispositif terminal est au même niveau que la première surface ;
relier l'élément de support transparent (3) au trou de transmission de la lumière (21) par l'intermédiaire d'un premier élément adhésif transparent (4), dans lequel une extrémité du premier élément adhésif (4) proche de l'écran d'affichage flexible (1) est au même niveau que la première surface ;
relier la deuxième partie de support (32) à la deuxième surface de la couche de support (2) par l'intermédiaire d'un deuxième élément adhésif (5) ; et
obtenir l'écran d'affichage en reliant une surface arrière de l'écran d'affichage flexible (1) à la première surface, dans laquelle la couche de support et l'élément de support transparent réduisent une dépression qui se forme sur une surface d'affichage de l'écran d'affichage flexible lorsque la surface d'affichage correspondant au trou de transmission de la lumière est pressée.

4. Méthode selon la revendication 3, dans laquelle la connexion de la surface arrière de l'écran d'affichage flexible (1) avec la première surface comprend :
obtenir une deuxième couche adhésive transparente (7) ; et
relier la surface arrière de l'écran flexible (1) à la première surface à travers la seconde couche adhésive (7).
